**Europäisches Patentamt**

**European Patent Office**

**Office européen des brevets**

(19)

(11) Publication number: **0 065 871**
**A1**

(12) ## EUROPEAN PATENT APPLICATION

(21) Application number: **82302572.1**

(22) Date of filing: **20.05.82**

(51) Int. Cl.³: **A 01 J 7/00**

(30) Priority: **22.05.81 NZ 197170**

(43) Date of publication of application:
**01.12.82 Bulletin 82/48**

(84) Designated Contracting States:
**DE FR GB IT SE**

(71) Applicant: **AHI OPERATIONS LIMITED**
**640 Great South Road**
**Manukau City Auckland(NZ)**

(72) Inventor: **Phillips, Evan Moreland**
**26 Acacia Crescent**
**Hamilton(NZ)**

(72) Inventor: **Phillips, Douglas Steward Moreland**
**45 Fifth Avenue**
**Hamilton(NZ)**

(74) Representative: **Bayliss, Geoffrey Cyril et al,**
**BOULT, WADE & TENNANT 27 Furnival Street**
**London EC4A 1PQ(GB)**

(54) Milking systems and methods of operation thereof.

(57) A milk flow sensing and vacuum control has a passageway (15, 99) containing a valve seat (4) and a diaphragm (6) is interposed with one side thereof as one wall of the passageway (15, 99) and with the other side (7) thereof as one wall of a timing vessel. (8) The timing vessel has an air bleed (20) controlled through an air control valve (30, 31) by the diaphragm (6) and is supplied with vacuum through a vacuum valve (60) also controlled by the diaphragm (6). The diaphragm (6) varies in position according to the pressure in the passageway (15, 99) which pressure varies according to the volume of milk flowing in pulses in that passageway, when the milk flow drops the pressure in the timing vessel (8) increases causing closing of the passageway by coaction of the diaphragm (6) with the valve seat (4). Increase of pressure in the timing vessel (8) also causes operation of a vacuum ram valve (73) which causes operation of a teat cup removal ram (70). Manual starting (10) and stopping (41) valves are provided.

EP 0 065 871 A1

./...

Fig.1.

- 1 -

"MILKING SYSTEMS AND METHODS OF OPERATION THEREOF"

This invention relates to milking systems and/or methods of operating the same.

It is an object of the present invention to provide a milking system and/or a method of operating a milking system which will at least provide the public with a useful choice.

Accordingly in one aspect the invention consists in a method of operating a milking system said method comprising the steps of sensing the rate of flow of milk by sensing variations in pressure in a passageway through which milk flows, maintaining milking vacuum on teat cups applied to an animal whose milk flow is being sensed while that pressure differs from a predetermined pressure due to a sufficiently high rate of milk flow and causing the vacuum to the teat cups to be cut off when the sensed pressure due to a low rate of milk flow is substantially the same as a predetermined pressure.

In a further aspect the invention consists in a milk flow sensing and vacuum control means for use in a milking machine and comprising a passageway through which in use milk flows from a set of teat cups to a milk line of said milking machine, sensing means which in use sense variations in pressure in said passageway caused by the pulsed flow of milk therein and control valve means responsive to said sensing means which in use close off connection of said teat cups to said milk line when said pressure in said passageway reaches a substantially predetermined value.

In a still further aspect the invention consists in a milking system including a passageway from a cluster of teat cups to a milk line of a milking machine, a restriction in said passageway and sensing means for sensing pressure differential in use as between the upstream side and the downstream side of said restriction using said differential pressure to control or maintain a predetermined vacuum level in a timing vessel and when the vacuum in the timing vessel falls below a predetermined limit, means are operated to cut off vacuum to said teat cups.

To those skilled in the art to which this invention relates, many changes in construction and widely differing embodiments and applications of the invention will suggest themselves without departing from the scope of the invention as defined in the appended claims. The disclosures and the descriptions herein are purely illustrative and it is not our intention to limit the scope of the invention by those disclosures and descriptions, or otherwise, than by the terms of the appended claims.

One preferred form of the invention will now be described with reference to the accompanying drawings in which:

Figure 1 is a diagrammatic cross section of apparatus according to the invention;

Figure 2 is an inverted diagrammatic view of an upper portion of the apparatus shown in figure 1;

Figure 3 is a sketch to a larger scale of a vacuum control or "latching" valve shown in figure 1;

Figure 4 is a cross section of a control member forming part of the valve of figure 3;

Figure 5 is a cross section also to a larger scale of a vacuum ram control valve according to the invention; and

Figure 6 is a sketch to a larger scale of a vacuum level boosting means or "sipper" valve shown in figure 1.

Referring to the drawings a milk flow sensor and vacuum control means according to the invention is associated in use with a milking machine of known construction having the usual vacuum pump, vacuum line, milk line, pulsator, releasor and cluster of teat cups associated with other equipment in the known way.

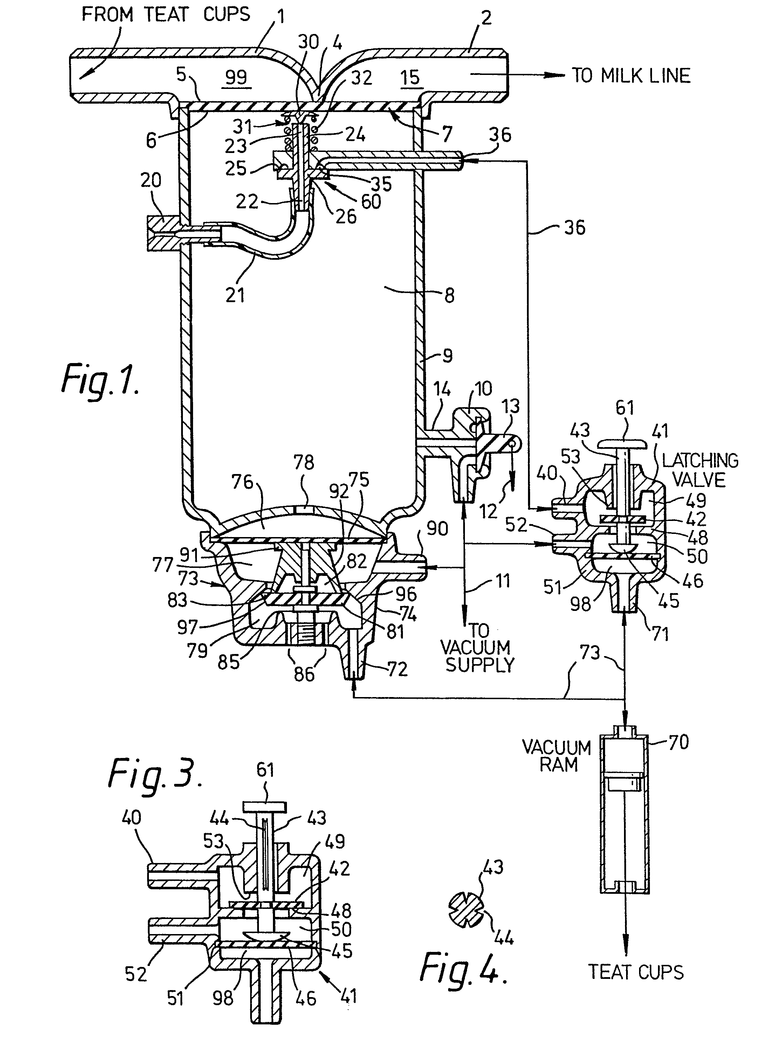

Referring to figure 1 a passageway comprises a milk inlet or milking cluster port 1 connected in use to teat cups and a milk outlet 2 connected in use to the milk line of the milking machine, and interposed between these is a wedge shaped division 3 (figure 2) with a valve seat surface 4 of the wedge shaped division 3 coacting with the upper face 5 of a diaphragm 6 to form a restriction in the passageway. When the milking machine is operating vacuum (which is the expression herein used to describe operating conditions of working pressures below atmospheric, the working pressures being well known in the milking industry) from the milk outlet 2 acting on the surface 5 of diaphragm 6 draws that diaphragm firmly against the valve seat 4 thus shutting off the milking cluster port 1 from the machine vacuum unless the diaphragm is controlled as is described below.

The other side 7 of the diaphragm 6 forms a closure to a timing vessel 8 in a body 9. A manually operable starting valve 10 is provided leading into the vessel 8 and this valve is connected to line vacuum supply at 11, that is to say the vacuum generated by the vacuum pump of the milking machine. The valve is actuated by pulling in the direction of the arrow 12 on the member 13 causing vacuum to be admitted through passageway 14 into the vessel 8. When this occurs the diaphragm 6 is drawn away from valve seat 4 since the area of that portion of the diaphragm 6 exposed to chamber 15 is less than the total area of the underside of the diaphragm 6. When this occurs a milking cluster of teat cups connected to the passageway 1 is connected to the passageway 2, i.e. to milk line vacuum so that the teat cups may be placed on the cow for milking to commence. As long as an adequate vacuum level is maintained in vessel 8 as will be described further later, the diaphragm 6 remains drawn away from the valve seat 4 and milking will continue.

Control of pressure in vessel 8 is effected by pressure control means comprising firstly an air bleeding means having an air jet or bleed 20 which has an orifice of small cross sectional area and which admits air into the vessel 8 through a flexible tube 21 and a conduit 22 leading to a passageway 23 of a hollow shaft 24. A small shut off valve comprises a cap 30 which coacts with a valve seat 31 formed on the end of shaft 24. The cap 30 is normally held open by spring 32 and the cap 30 is closed against valve seat 31, by downward movement of diaphragm 6 when the latter is pulled down by greater force on the lower side 7 thereof than the upper side 5 thereof.

If desired the flexible tube 21 and the shut off valve mechanism above described and comprising cap 30 and top 31 of shaft 23 may be omitted in which case the jet 20 will bleed directly into the vessel 8. The tube 21, the cap 30 coacting with the valve seat 31 of shaft 24 and passageway 23 are added to enable a slightly larger air bleed jet to be used to minimise the risk of obstruction and to give the same timing delay as a smaller jet operating without the valve.

The pressure control means secondly comprise a vacuum level boosting valve or sipper generally referenced 60 having a valve seat 25 of valve member 26 the latter being integral with shaft 24. The cap 30 has an inwardly directed collar 37 engaging an outwardly directed collar 38 on shaft 24 so that spring 32 also holds valve member 26 on seat 25.

Pressure of diaphragm 6 on the cap 30 will firstly close that cap against valve seat 31 to limit air entry to chamber 8 and secondly will move valve member 26 away from annular opening 35 which connects the interior of vessel 8 with a pipe 36 connected to vacuum supply permitting reduction of pressure in vessel 8.

The vessel 8 must be of adequate capacity to maintain a low enough vacuum level to hold the diaphragm 6 away from the valve seat 4 for long enough to allow the cow to have a proper let down and for milk flow to be established. For constructional purposes the vessel 8 may be made as small as is necessary to allow a compact device for easy mounting and to reduce clutter in the milking area provided that additional capacity in the form of a suitable vessel is connected to the vessel 8. Such vessel is not shown in the drawings. This additional capacity may be a moulded bottle or tank or convenient tubing which may form part of the milking installation framework. The vessel 8 also provides a suitable delay before cluster removal is initiated at the end of milking as will be described further later.

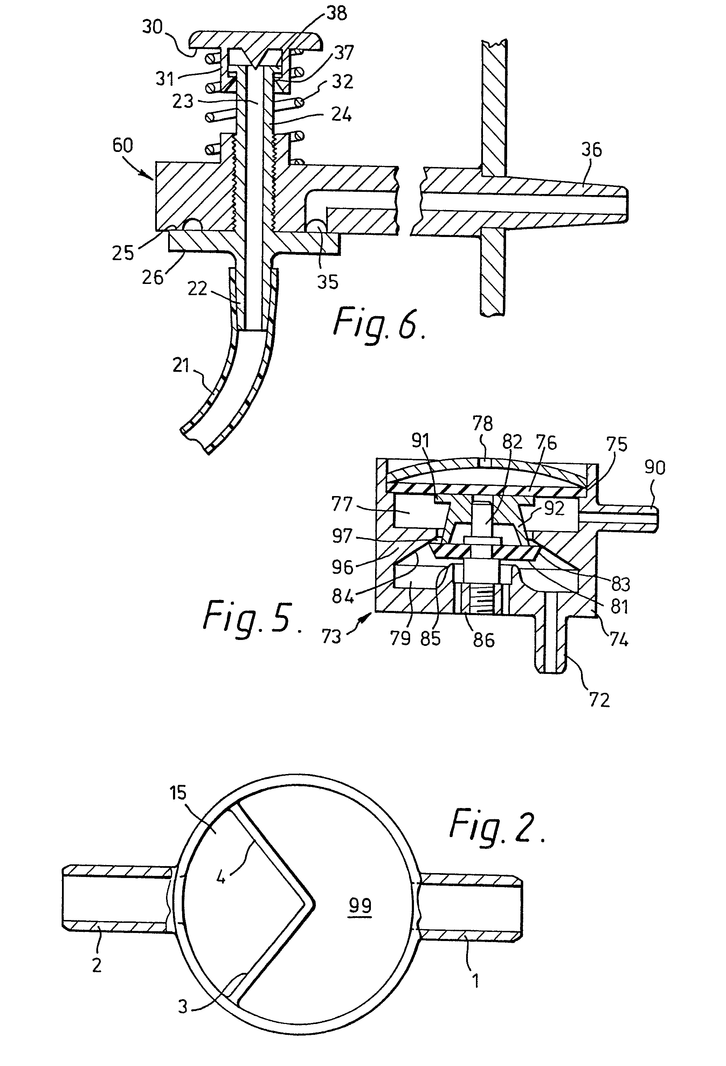

The pipe 36 is connected to inlet 40 of a vacuum control or latching valve 41 shown in more detail in figure 3. The latching valve 41 has a flexible valve member 42 carried on a spindle 43 which is shown in cross section in figure 4 and has a series of grooves 44 on the outerwall thereof. The valve member 42 is carried on the spindle 43 so that when the cap 45 is in contact with a diaphragm 46 the valve member 42 is in close contact with a valve seat 48 closing off the connection between the chambers 49 and 50. The diaphragm 46 is retained in position by the part 51 of the valve 41 being made in the form of a cap which is fixed to the body of the valve to form an air-tight seal over the open end of chamber 50. Vacuum is connected to the port 52 from vacuum connection 11, and accordingly air is evacuated from chamber 49 so that the diaphragm 46 will flex into the chamber 49 to press on the cap 45 of the valve seat 48 and into contact with a further valve seat 53. Vacuum will then be connected from the port 52 through the chamber 50, the opening between valve member 42 and the valve seat 48 to chamber 49 and thence to the port 40 and pipe 36 which in turn is connected to the vacuum level boosting or sipper valve referred to generally by reference 60 (figures 1 and 6). The shaft 43 has a manually operable knob 61 and is grooved at 44 as above described, for a purpose to be described later.

To remove the teat cup cluster a vacuum ram 70 (shown diagrammatically) is provided which is connected to outlet 72 of an inhibiting means including a vacuum ram control valve mounted so as to be interconnected with the interior of the vessel 8. A connection 73 from the vacuum ram 70 to part 71 of the latching valve operates the latching valve when the ram is energized.

The vacuum ram control valve 73 comprises a body 74 which has a diaphragm 75 the upper surface of which is connected to a lower part of the vessel 8 there being a chamber 76 above the diaphragm 75 and a further chamber 77 below it. There is a port 78 between the vessel 8 and the chamber 76. Of course the vacuum ram control 73 could be separated from the chamber 8 with an interconnecting tube connecting the two. A further chamber 79 is provided and a flexible valve member 81 is mounted on a stud 82 so that the upper outer edge 83 is maintained in firm contact with the surface 84 of the body by the natural elasticity of the valve member 81 and with the lower surface of the valve member 81 just clear of an air valve seat 85. The seat 85 is smaller in diameter than the inner diameter of bell member 92. The lower edge of bell member 92 rests without pressing and/or is close to the upper surface of valve member 81. It is important that member 92 does not press on flexible valve member 81 as this could affect the sealing of that valve. Air is then able to pass through the inlet ports 86 through the space between the valve member 81 and the valve seat 85, port 72 to the vacuum ram or also through line 73 and port 71 to the latching valve 41. Since port 78 is connected to the vessel 8 then vacuum in vessel 8 can operate on the whole upper surface of the diaphragm 75. System vacuum is connected from pipe 11 through opening 90 to chamber 77. However part of the lower surface of the diaphragm 75 is covered by a part 91 of a pressure bell 92. The ratio of uncovered lower surface of the diaphragm 75 to the total upper surface thereof will determine the vacuum level in chamber 76 (which is the same as that in vessel 8 and chamber 49 of the latching valve) which will hold diaphram 75 in a state where it is not pressing on bell 92 strongly enough to operate flexible valve 81. As the vacuum level in vessel 8 and consequently chamber 76 falls, which will occur when the action of the sipper valve fails to keep the vacuum in vessel 8 up against the bleeding of air in through jet valve or bleeder valve 20, which will occur when the valve 60 is closed to prevent admission of vacuum into vessel 8, the system vacuum acting in chamber 77 will draw the diaphragm 75 downwards so that the pressure bell 92 will deflect the flexible valve 81 away from the seat 84 and onto the seat 85.

The tapered lower face 96 in the chamber 79 and the relatively thin outer edge 97 of the valve member 81 will allow the flexible outer edge of the valve member 81 to "hold on" to the seat 84 under the influence of vacuum in chamber 77 until the valve deflecting force is sufficient to break this hold at which time the valve member 81 will snap rapidly across to make contact with the seat 85 thus effecting a reliable and rapid switching action. With valve member 81 so deflected the system vacuum is then connected via port 90, chamber 77, the gap between valve member 81 and the valve seat 84 chamber 79 and port 72 to the vacuum ram 70 which will remove the teat cups from the cow.

With valve member 81 in contact with the air valve 85, the atmospheric air supply from ports 86 to the vacuum ram is cut off.

The operating vacuum level of the ram valve is chosen so that operation of the ram valve will not take place until after the cow being milked has reached the desired end point of milking and the flexible diaphragm 7 in the initiator is held against the valve seat 4 effectively cutting vacuum supply from the teat cups so that the cups are ready to be removed from the cow when the ram valve operates.

If it is desired to interupt milking at any time during the process, pressure on the knob 61 of the latching valve will move the valve 42 from contact with the valve seat 53 against the effect of vacuum in the chamber 50 acting on diaphragm 46 cutting vacuum from the valve 60 and allowing air to enter through the gaps 44, chamber 49, the pipe 36, the valve 60 which is opened by the air pressure and because of the action of the diaphragm 6 into the vessel 8 to add to air bleeding into that chamber from air bleed 20 so running down the vacuum level in the vessel 8 very quickly and diaphragm 6 closes against the valve seat 4 which cuts off vacuum from the milk line to the teat cups and also operates the ram valve to initiate cup removal.

The operation of the construction is as follows:

It will be assumed that an operator is about to apply the teat cups to the teats of a cow. Accordingly he admits vacuum into the vessel 8 by manual actuation of the valve member 13, admitting vacuum from pipe 11 through the valve 10 and passageway 14 into the vessel 8. This causes the diaphragm 6 to be withdrawn from contact with the valve seat 4 permitting vacuum to flow from the milk tube 2 to the teat cup tube 1. As the diaphragm 6 is drawn into the vessel 8 it actuates the valve cap 30 onto valve seat 31 causing inhibition of bleeding air from the air bleed 20 into the chamber 8. Further inward movement of diaphragm 76 will lift valve 26 off seat 25 to boost vacuum in vessel 8 via line 36. Also because the vacuum is admitted from vacuum pipe 11 through pipe 52 into chamber 50 the valve member 42 will be raised against valve seat 53 and as a result vacuum from pipe 52 passes through the opening between valve member 42 and valve seat 48 and thus pass into pipe 36 and thus enter the vessel 8. As soon as a pulse of milk has passed, the pressure difference across valve seat 4 will be reduced, increasing the vacuum level in chamber 99 (this is the chamber inside port 1) and as this vacuum level rises and because of air bleeding into chamber 8, diaphragm 6 will tend to move upwards towards seat 4, closing valve 26 against seat 25. Provided that another pulse of milk arrives at port 1 to again increase the vacuum drop across seat 4 and cause diaphragm 6 to move again towards vessel 8, milking will continue until an absence of milk pulses allows diaphragm 6 to close against valve seat 4 and cut off vacuum from the teat cups.

While milking continues there is a pressure differential as between both sides of the valve seat 4 but as the flow of milk reduces, this pressure differential decreases until there is almost the same vacuum over the whole area of the diaphragm 6 and on both sides of that diaphragm. Because of the action of the pulsator on the cow's teat and because of flow turbulence in the milk lines, milk arrives from the cluster to the sensing device, that is port 1 in a discontinuous manner, that is, in bursts or pulses of milk and air of varying densities.

This means that the diaphragm 6 is continuously moving and operating the "sipper" valve to cause intermittent extraction of small quantities of air from the timing vessel 8 or "boost" of the vacuum therein.

As the diaphragm 6 moves towards seat 4, it will not quite reach there before the sipper valve closes and the air bleed inhibiting valve opens to allow air bleeding to continue into the timing vessel. Also of course if the diaphragm closes against seat 4, no more milking will take place and teat cup removal will be initiated.

Thus the sipper valve counteracts the air being bled in through jet 20 and maintains an operating vacuum in vessel 8 until the milk flow has reduced to the level where the pulses may be further apart, or lesser in duration and consequently will not hold the sipper valve open as long or as often so that the vacuum level in vessel 8 will degrade to the point where the valve at the base of vessel 8 and as described with reference to figure 5 will operate to remove the teat cup. As a result the diaphragm will lift and in particular this will cause closing of the valve member 35 onto its seat with the result that the vacuum entering the chamber 8 through the pipe 36 is cut off. In addition the cap 30 will be lifted off the valve seat 31 and the air bleed 20 then communicates with the interior of the chamber 8. This will result in a gradual reduction of pressure in the vessel 8 depending on the size of the air bleed and the size of the vessel 8 until eventually the diaphragm 75 moves downwardly vacuum from pipe 11 through entry 90 into the chamber 77 and this will cause actuation of the valve member 81 resulting in change over of that valve as above described to cut off air through air entry pipes 86 and cause vacuum from pipe 11 through chamber 77 and through exit 72 and lead 73 to both the ram 70 and the chamber 98. Thus positive cut off of vacuum to lead 36 occurs resulting in a final closure of the diaphragm 6 against the valve seat 4 cutting off vacuum to the teat cups and because of the application of vacuum to the vacuum ram 70 the teat cups are removed from the cows teats.

It will be seen that the invention at least in the preferred form provides a simple means of monitoring milk flow and initiating automatic cluster removal in which the only components in contact with the milk are the cover member including the tubes 1 and 2 and one surface of the diaphragm 6. There are no floats, small apertures or other devices in contact with the milk in the present construction. Such floats or apertures pose hygiene maintenance or other problems in alternative constructions.

It is also a relatively simple matter to use the vacuum (pressure) level in the vessel 8 which will change within limits according to milk flow to control or change the pulsation rate or ratio. Thus the partial opening or closing of the diaphragm 6 against the valve seat 4 causes changes in pressure levels in the vessel 8 which can be used to control the pulsation rate.

The constituent components may readily be combined into a single operating unit or used in a separately distributed manner or any combination of these as may be required for any specific operation.

"Upper" and "lower" in this specification refer only to the dispositions of the apparatus as shown in the drawings and other dispositions are possible with consequent variation of the words "upper" and "lower".

Claims

1. A method of operating a milking system said method comprising the steps of sensing the rate of flow of milk by sensing the variations in pressure in a passageway (15,99) through which milk flows, maintaining milking vacuum on teat cups applied to an animal whose milk flow is being sensed while that pressure differs from a predetermined pressure due to a sufficiently high rate of milk flow and causing the vacuum to the teat cups to be cut off when the sensed pressure due to a low rate of milk flow is substantially the same as a predetermined pressure.

2. A method as claimed in claim 1 which includes the step of sensing said pressure variations by applying the pressure in said passageway (15,99) to one surface of a pressure sensitive member (6) in a manner such that the position of at least part of the pressure sensitive member (6) is a measure of the pressure in said passageway (15,99) and using the variations of position of the pressure sensitive member (6) relative to a valve seat (4) positioned in said passageway (15,99) intermediate of the length in the direction of flow of said pressure sensitive member to vary the cross sectional area of a part of said passageway (15,99) and to cause variations of pressure on said pressure sensitive member (6) as between the parts thereof respectively upstream and downstream of said valve seat.

3. A method as claimed in claim 2 which includes the step of causing changes in position of said pressure sensitive member (6) to cause variations of pressure in a timing vessel (8) connected to atmosphere through a restricted orifice (20) by connecting said pressure vessel through a valve (60) to a source of vacuum (11) said valve (60) being opened and closed according to the position of said pressure sensitive member (6).

4. A method as claimed in claim 3 which includes the step of also controlling admission of air through said restricted orifice (20) to said timing vessel according to the position of said pressure sensitive member (6).

5. A method as claimed in claim 3 or claim 4 which includes the steps of causing actuation of a cluster removal means (70) to remove the teat cups from the animal shortly after cutting off of said vacuum to said teat cups is effected.

6.     A method as claimed in claim 5 which includes the step of causing actuation of said cluster removal means on the pressure in said timing vessel (8) increasing to a predetermined value.

7.     Milk flow sensing and vacuum control means for use in a milking machine and comprising a passageway (15,99) through which in use milk flows from a set of teat cups to a milk line of said milking machine, sensing means (6) which in use sense variations in pressure in said passageway caused by the pulsed flow of milk therein and control valve means (60) responsive to said sensing means which in use close off connection of said teat cups to said milk line when said pressure in said passageway (15,99) reaches a substantially predetermined value.

8.     Milk flow sensing and vacuum control means as claimed in claim 7 wherein a pressure sensitive member (6) forms one wall of said passageway (15,99).

9.     Milk flow sensing and vacuum control means as claimed in claim 8 wherein said control valve means (60) includes a valve seat (4) positioned intermediate of the length in the direction of flow of said pressure sensitive member (6) with which said pressure sensitive member (6) coacts to cause a variable restriction in said passageway (15,99), said valve seat (4) being shaped and positioned so that in use there is a variation in pressure as between the part of said pressure sensitive member (6) upstream of said valve seat (4) and the part of said pressure sensitive member (6) downstream of said valve seat (4).

10.    Milk flow sensing and vacuum control means as claimed in claim 8 or claim 9 wherein said pressure sensitive member (6) comprises a diaphragm (6), one side (5) of which forms said wall of said passageway and the other side (7) of which forms a wall of a timing vessel (8), an air admission inlet (20) and a vacuum supply inlet (36) are provided leading into said timing vessel (8) and a vacuum supply valve (60) is provided in said vacuum supply inlet (36) actuated by said diaphragm (6) so that when pressure rises in said timing vessel (8) to a predetermined value, closing off of said teat cups from said milk line is effected.

11. Milk flow sensing and vacuum control means as claimed in claim 10 wherein an air admission valve (30,31) is provided in said air inlet (36) controlled by said diaphragm (6).

12. Milk flow sensing and vacuum control means as claimed in claim 10 or claim 11 wherein said vacuum supply valve (60) comprises a valve seat (23) connected to a vacuum supply pipe (36), a movable valve member (24) having a hollow stem (24) the conduit (23) in which in use forms part of said air admission inlet (20) and said air admission valve (30,31) comprises a cap (30) which coacts with a valve seat (31) on said stem (24), said cap (30) being held open and said vacuum supply valve being held closed by a spring (32) and said air admission valve being closed and said vacuum supply valve opened when said diaphragm moves away from said passageway.

13. Milk flow sensing and vacuum control means as claimed in any one of claims 7 to 12 wherein said vacuum control means actuates a teat cup removing piston and cylinder assembly (70) operable on actuation so that closing off of said connection of said teat cups to said milk line is followed by actuation of said piston and cylinder assembly (70) to remove the teat cups from the animal being milked.

14. Milk flow sensing and vacuum control means as claimed in claim 13 when dependent on claim 11 or claim 12 wherein an actuating diaphragm (75) mounted in a body (74) is exposed in use on one side to pressure in said timing vessel and on the other side to the milking machine vacuum supply (11), said body (74) also carrying a ram control valve (73) controlled by appropriate movement of said actuating diaphragm (74) to admit air or vacuum to said piston and cylinder assembly (70).

15. Milk flow sensing and vacuum control means as claimed in claim 14 wherein said ram control valve (73) has a flexibly resilient valve member (81) the edges (83) of which contact inner surfaces of said body (74) in one mode of operation and to contact a valve seat (85) controlling air admission in another mode of operation.

16. Milk flow sensing and vacuum control means as claimed in claim 14 or claim 15 wherein a latching valve (41) is provided manually operable to cause closing off of said connection between said teat cups and said milk line followed by actuation of said piston and cylinder assembly (70) to withdraw the teat cups from the animal being milked.

17. Milk flow sensing and vacuum control means as claimed in any one of claims 10 to 16 wherein a manual setting valve (10) is provided connected in use to a vacuum supply so that actuation thereof causes starting reduction of pressure in said timing vessel (8).

18. A milking machine having milk flow sensing and vacuum control means according to any one of claims 8 to 17.

19. A milking system including a passageway (15,99) from a cluster of teat cups to a milk line of a milking machine, a restriction in said passageway and sensing means (6) for sensing pressure differential in use as between the upstream side and the downstream side of said restriction using said differential pressure to control or mantain a predetermined vacuum level in a timing vessel (8) and when the vacuum in the timing vessel (8) falls below a predetermined limit, means (6,4) are operated to cut off vacuum to said teat cups.

FROM TEAT CUPS

TO MILK LINE

Fig.1.

Fig.3.

Fig.4.

LATCHING VALVE

TO VACUUM SUPPLY

VACUUM RAM

TEAT CUPS

Fig. 6.

Fig. 5.

Fig. 2.

European Patent Office

**EUROPEAN SEARCH REPORT**

Application number

EP 82 30 2572

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-2 538 652 (A.G.PERKINS et al.) *Column 3, line 1 - column 5, line 34; figures 1-6* | 1-4,7-12,19 | A 01 J 7/00 |
| X | US-A-2 549 231 (A.G.PERKINS) *Column 1, lines 17-24; column 2, line 20 - column 4, line 6; figures 1-3* | 1-2,7-8,19 | |
| A | US-A-2 545 857 (A.G.PERKINS) *The whole document* | 1,7,19 | |
| A | US-A-2 572 658 (A.G.PERKINS) *The whole document* | 1,7,19 | |
| A | FR-A-2 244 396 (MULLINAHONE COOPERATIVE DAIRY SOCIETY LIMITED) | | TECHNICAL FIELDS SEARCHED (Int. Cl. 3) A 01 J 7/00 |

The present search report has been drawn up for all claims

| Place of search | Date of completion of the search | Examiner |
|---|---|---|
| THE HAGUE | 27-07-1982 | NEHRDICH H.J |